# EUROPEAN PATENT SPECIFICATION

(11) **EP 4 173 911 B1**
(45) Date of publication and mention of the grant of the patent: **26.06.2024**
(21) Application number: 21205860.6
(22) Date of filing: 02.11.2021
(51) Int. Cl.: B60T 17/08

(54) **DIAPHRAGM BRAKE CYLINDER WITH REDUCTION RING INTEGRATED IN THE DIAPHRAGM**
MEMBRANBREMSZYLINDER MIT IN DIE MEMBRAN INTEGRIERTEM REDUZIERRING
CYLINDRE DE FREIN À MEMBRANE AVEC ANNEAU DE RÉDUCTION INTÉGRÉ DANS LA MEMBRANE

(43) Date of publication of application: 03.05.2023
(73) Proprietor: KNORR-BREMSE Systeme für Nutzfahrzeuge GmbH, 80809 München (DE)
(72) Inventor: DEROUAULT, Sylvain, 14100 Hermival les Vaux (FR); LETOT, Guillaume, 14940 Sannerville (FR); HEMERY, Franck, 14600 Honfleur (FR)

(56) References cited:
- EP-A1- 2 916 028
- DE-A1- 19 830 154

## Description

According to claim 1, the invention relates to a pneumatic diaphragm brake cylinder for motor vehicles, in particular commercial vehicles, having a housing part on the pressure side and a housing part facing away from the pressure side, as well as a diaphragm arranged therebetween, which divides the interior space of the brake cylinder into two spaces sealed off from one another, of which a first space comprises or represents a pressure space loaded by a pneumatic pressure and a second space comprises or represents a piston space for a piston actuated by the membrane, wherein a peripheral fastening edge of the membrane is clamped between the pressure-side housing part and the pressure-remote housing part. Furthermore, the invention according to claim 16 also relates to a pneumatic brake device comprising at least one such pneumatic diaphragm brake cylinder.

Such pneumatic diaphragm brake cylinders are frequently used in air brake systems for commercial vehicles, whereby they are used as service brake cylinders for a service brake by themselves or in combination with a spring brake cylinder, i.e. in a so-called combination cylinder. In this case, the housing part on the pressure side and the housing part facing away from the pressure are connected to each other, with the edge of the diaphragm being clamped at the butt joint between the housing parts. This type of construction has gained acceptance over piston brake cylinders with sliding sealing element primarily because of its robust design and cost-effective manufacture. In terms of design, the diaphragm brake cylinders mentioned have in common that an elastomeric, fabric-reinforced diaphragm is generally used to seal the service brake pressure chamber and to transmit the pneumatic pressure force to the service brake piston.

Furthermore, a combined service brake and spring brake cylinder has become known from DE 198 30 154 A1, in which an intermediate flange is used as a connecting device for a service brake cylinder and a spring brake cylinder.

It is the object of the present invention to provide a pneumatic diaphragm brake cylinder which is flexible in use and easy to manufacture. Furthermore, a pneumatic brake device with at least one such pneumatic diaphragm brake cylinder is to be provided.

This task is solved by the features of claims 1 and 16.

### Disclosure of the invention

The invention discloses a pneumatic diaphragm brake cylinder for motor vehicles, with a housing part on the pressure side and a housing part facing away from the pressure side, as well as a diaphragm arranged therebetween, which divides the interior space of the brake cylinder into two spaces sealed off from one another, of which a first space comprises or represents a pressure chamber loaded by a pneumatic pressure and a second space comprises or represents a piston chamber for a piston actuated by the diaphragm, wherein a peripheral fastening edge of the diaphragm is clamped between the housing part on the pressure side and the housing part facing away from the pressure side.

The pressure chamber can be vented to increase the pneumatic pressure and vented to decrease the pneumatic pressure, whereby the piston is extended from the brake cylinder by increasing the pressure and retracted into the brake cylinder by decreasing the pressure. In this case, the diaphragm performs an axial working movement, the axial direction being parallel to the piston.

Furthermore, it is envisaged that
a) the pneumatic pressure loads an effective area of the diaphragm with respect to a working movement of the diaphragm, and
b) a reduction ring is provided which extends axially from the diaphragm into the housing part facing away from the pressure and which radially limits and in particular radially reduces the effective area of the diaphragm.

In other words, the reduction ring reduces or radially limits the inner diameter of the housing part facing away from the pressure. This variably adapts or reduces the effective area of the diaphragm for the pneumatic pressure, which can deform in particular elastically as a result of the pneumatic pressure during the working movement. This has the consequence that the force generated on the diaphragm as a result of the pneumatic pressure is adapted or reduced. The force exerted by the diaphragm cylinder via the piston can therefore be individually adjusted by means of the reduction ring.

Furthermore, it is envisaged that
c) at least the reduction ring and the diaphragm are designed as a one-piece component.

In other words, the diaphragm and the reduction ring are integrally combined in the one-peice component. This measure simplifies the production of the diaphragm cylinder, because instead of two parts, namely a separate diaphragm and a separate reduction ring, only one single component has to be mounted to the diaphragm cylinder, in which the diaphragm and the reduction ring are integrally combined. On the other hand, this combination of the diaphragm and the reduction ring also makes the diaphragm cylinder less sensitive to leaks because the number of sealing points is reduced.

Advantageous further embodiments of the invention are disclosed by the subclaims.

Preferably, the reduction ring is axially attached to the diaphragm on the pressure-remote side. Preferably, the reduction ring may also be radially intermediate a radially inner circumferential surface of the housing part facing away from the pressure and a piston rod which is actuated by the diaphragm. Also, a radially outer circumferential surface of the reduction ring may comprise at least one recess and/or form an annular gap with respect to the radially inner circumferential surface of the housing part facing away from the pressure, which annular gap or annular gaps form a flow connection between the second space and at least one breathing opening of the housing part facing away from the pressure.

According to a further embodiment, the diaphragm may comprise a fabric reinforced elastomer and/or the reduction ring may comprise an elastomer without fabric reinforcement.

The diaphragm can also have a bellows-shaped area extending into the housing part facing away from the pressure, which adjoins the reduction ring radially on the inside.

Preferably, the pneumatic diaphragm brake cylinder may comprise an active pneumatic service brake cylinder configured to apply a service brake when aerated and release the service brake when deaerated.

According to a further embodiment, the pressure-side housing part
a) comprise an intermediate flange, which is designed so that a housing of a spring brake cylinder can be attached to it, or
b) comprise a housing of a spring brake cylinder.

The spring brake cylinder comprises a spring brake piston which is loaded by at least one accumulator spring and which separates a spring brake chamber, which can be ventilated and exhausted, from a spring chamber in which the at least one accumulator spring is arranged. The spring brake cylinder is preferably a passive pneumatic parking brake cylinder, which is designed to release a parking brake when the spring brake chamber is vented and to apply the parking brake when the spring brake chamber is vented.

Also, the pneumatic diaphragm brake cylinder may comprise or constitute a combination cylinder of the service brake cylinder and the spring brake cylinder.

Preferably, the fastening edge has a wedge-shaped cross-section tapering radially inwardly. Furthermore, a first edge of the pressure-side housing part and a second edge of the housing part facing away from the pressure can form axially between them a radially outwardly enlarging intermediate space which is complementary with respect to the radially inwardly tapering cross section of the fastening edge and in which the fastening edge is clamped. A compressive load on the diaphragm then pulls its fixing edge into the radially inwardly tapering intermediate space, which advantageously increases the sealing effect.

For example, the first edge and the second edge can be braced against each other by a tension band or crimped together under plastic deformation. A crimping is therefore to be understood here as a plastic deformation of the first edge and/or the second edge such that a form-fitting connection is produced between the edges.

Preferably, the reduction ring is radially intermediate a radially inner peripheral surface of the housing part facing away from the pressure and a piston rod which is actuated by the diaphragm. Centrally connected to the piston rod is a piston which is actuated by the diaphragm.

Also, a radially outer circumferential surface of the reduction ring may have at least one recess or form an annular gap with respect to the radially inner circumferential surface of the housing part facing away from the pressure, which recess or gap forms a flow connection between the second space and at least one breathing opening of the housing part facing away from the pressure. Compressed air can then escape from the piston chamber when the pressure chamber is vented and the then actuated diaphragm reduces the piston chamber.

Preferably, the diaphragm has a bellows-shaped area extending into the housing part facing away from the pressure, which adjoins the reduction ring radially on the inside.

In the pneumatic diaphragm brake cylinder, an elastomeric, fabric-reinforced diaphragm is therefore preferably used to seal the pressure chamber and to transmit the pneumatic pressure force to the piston or piston rod. However, experience from practical operation has shown that, especially with the increased operating and test pressures of modern air brake systems, sealing problems increasingly occur in the clamping zone of the diaphragm. It can happen that the diaphragm is insufficiently centred during the assembly process. This can be the case if, for example, the conical contact surfaces of the edges of the housing parts as well as the contact surfaces of the fastening edge of the diaphragm arranged between them are more or less decentered with respect to their symmetry before the clamping of the components takes place, or they are decentered if a radial displacement of the components with respect to each other occurs during the clamping operation. This occurs frequently, especially in manual manufacturing operations. This leads to a non-constant compression of the fastening edge over the circumference and promotes leakage at points with reduced compression.

To overcome this problem, a centering ring is preferably integrally formed on the diaphragm, which is arranged radially inwardly offset with respect to the peripheral fastening edge, projects axially into the pressure-side housing part and centers the diaphragm with respect to a radially inner circumferential surface of the pressure-side housing part. For example, the centering ring may be arranged substantially perpendicular to a center plane of the peripheral fastening edge and/or parallel to a radially inner peripheral surface of the pressure side housing portion. Preferably, the centering ring contacts the radially inner circumferential surface of the pressure side housing portion, thereby creating the centering. Thus, in rhis case, the diaphragm, the reduction ring and the centering ring may form the integrated one-piece component.

The invention also relates to a pneumatic braking device comprising at least one pneumatic diaphragm brake cylinder described above, and also to a vehicle comprising such a pneumatic braking device.

### Drawing

An example of an embodiment of the invention is described in more detail in the following description with reference to the figures. It shows:
- Fig. 1: A partial longitudinal section of a pneumatic diaphragm brake cylinder according to a preferred embodiment of the invention;
- Fig. 2: a section of Fig. 1;
- Fig. 3: a longitudinal section of two housing parts and an assembly consisting of a diaphragm and a reduction ring of the pneumatic diaphragm brake cylinder of Fig. 1;
- Fig. 4: a perspective view of the assembly unit consisting of the diaphragm and the reduction ring of Fig. 3;
- Fig. 5: An assembly step of the pneumatic diaphragm brake cylinder of Fig.1.

### Description of the invention

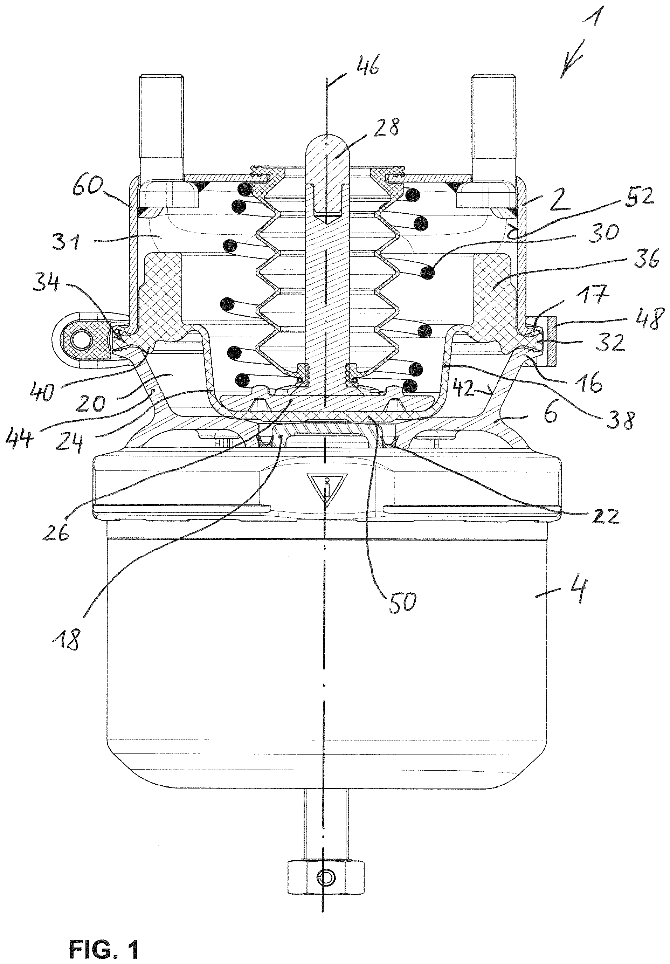

In **Fig. 1** to **Fig. 5****,** a combined service brake and spring brake cylinder 1, hereinafter referred to as a combination cylinder, is shown as a preferred embodiment of a pneumatic diaphragm brake cylinder. The combined service brake and spring brake cylinder 1 comprises a service brake cylinder 2, an intermediate flange 6 and a spring brake cylinder 4, wherein the service brake cylinder 2 is structurally and functionally connected to the spring brake cylinder 4 by the intermediate flange 6. A spring brake piston 8 is displaceably arranged within the spring brake cylinder 4, wherein a storage spring 10 rests against one side of the spring brake piston 8. The accumulator spring 10 is supported on its opposite side on the base of the spring brake cylinder 4. A spring brake chamber 12 is formed between the spring brake piston 8 and the intermediate flange 6, which chamber communicates, for example, with an electro-pneumatic valve device, not shown for reasons of scale, for venting and exhausting the same. When ventilated, the spring brake piston 8 is displaced axially into the parking brake release position under tension of the accumulator spring 10. During this displacement of the spring brake piston 8, the air which is present inside the spring chamber 14 accommodating the accumulator spring 10 is forced out via a vent not shown here. If, on the other hand, the spring brake chamber 12 is vented for the purpose of braking, then the accumulator spring 10 is able to displace the spring brake piston 8 into the applied position.

The spring brake piston 8 is connected to a hollow piston rod 18, which extends through the intermediate flange 6 into a pressure chamber 20 of the service brake cylinder 2 and is supported there on a diaphragm plate 26. A seal 22 inserted in the intermediate flange 6 seals against the outer wall of the piston rod 18 during its longitudinal movement. An inlet, which is not shown, opens into the pressure chamber 20, via which compressed air is admitted and discharged for actuating the service brake cylinder 2. The compressed air acts on a diaphragm 24 inserted within the service brake cylinder 2, on the opposite side of which a pressure piece in the form of the rigid diaphragm plate 26 is provided. More precisely, the diaphragm 24 separates the pressure chamber 20 of the service brake cylinder 2, which can be charged and discharged with pressure medium, from a piston chamber 31 accommodating a return spring 30 supported on the diaphragm plate 26. In relation to the service brake function and the pneumatic pressure prevailing in the pressure chamber 20, the intermediate flange 6 therefore forms here a housing part on the pressure side and the service brake cylinder 2 or its piston chamber 31 forms a housing part of the combined service brake and spring brake cylinder 1 facing away from the pressure.

The diaphragm plate 26 is connected to a push rod 28, which interacts with a brake actuating mechanism external to the combined service brake and spring brake cylinder 1. This may be, for example, actuating elements of a disc brake of a motor vehicle. The service brake cylinder 2 is an active brake cylinder, that is to say that the service brake is applied by venting the service brake chamber 20 and released by venting. The return spring 30, which is supported on the one hand on the diaphragm plate 26 and on the other hand on the base of the service brake cylinder 2, ensures that the pressure rod 28 is returned to the release position when the service brake chamber 20 is vented.

A radially outer attachment edge 32 of diaphragm 24 has a wedge-shaped cross-section tapering radially inwardly. This radially outer mounting edge 32 of the diaphragm 24, having a wedge-shaped cross-section tapering radially inwardly, is clamped between a first edge 16 of the intermediate flange 6 and a second edge 17 of the service brake cylinder 2 in a complementary shaped intermediate space or gap 34 having a wedge-shaped cross-section flaring radially outwardly. The intermediate flange 6 and the service brake cylinder 2 therefore form their edges 16, 17 as radially outwardly bent flanges, the oppositely facing inner surfaces of which form the intermediate space 34 of wedge-shaped cross-section between them.

Furthermore, at least one centering ring 40 extending in the axial direction and arranged offset radially inwardly with respect to the fastening edge 32 is formed or integrally formed on the diaphragm 24, which centering ring 40 points axially towards the intermediate flange 6 and by means of which the diaphragm 24 is centered against a radially inner circumferential surface 42 of the wall 44 of the intermediate flange 6. Particularly preferably, the centering ring 40 is arranged substantially perpendicular to a central plane of the peripheral fastening edge 32 and projects away from the diaphragm 24 on one side, for example. However, it is also conceivable that instead of this one centering ring 40, or additionally, a further centering ring is provided which projects in the direction of the spring brake cylinder 4 and centers against the radially inner circumferential surface of the wall thereof.

Last but not least, the radially inner circumferential surface 42 of the intermediate flange 6, against which the centering ring 40 centers, preferably lies on an imaginary cone, whose center axis is coaxial with the cylinder axis 46.

As shown, the centering ring 40 may be formed to be completely circumferential, as viewed in the circumferential direction, or to comprise ring sections. The diaphragm 24 and the centering ring 40 integrally formed therewith preferably comprise a fabric-reinforced elastomer.

Then, an axial component of the clamping force between the intermediate flange 6 and the service brake cylinder 2 causes the centering ring 40 of the diaphragm 24 to be pressed against the radially inner peripheral surface 42 of the wall 44 of the intermediate flange 6. In other words, the axial component of the clamping force ensures that the fastening edge 32 is pulled radially outwards due to the wedge effect and thereby the centering ring 40 is pressed with higher radial force against the radially inner circumferential surface 42 of the wall 44 of the intermediate flange 6 in the sense of a self-reinforcement of the centering.

Such an axial clamping force component can be realized, for example, by the second edge 17 of the service brake cylinder 2 and the first edge 16 of the intermediate wall 6 being overlapped by a clamping band 48, which then provides the axial component of the clamping force.

The diaphragm 24, the centering ring 40 and a reduction ring 36 form an integrated, one-piece component 38. While, as explained above, the diaphragm 24 and the centering ring 40 integrally formed therewith preferably comprise a fabric-reinforced elastomer, the reduction ring 36 comprises, for example, the same elastomer but without fabric reinforcement. The centering ring 40 is optional, however, because according to an embodiment not shown here, the one-piece component can also comprise only the diaphragm 24 and the reduction ring 36.

The reduction ring 36 extends axially from the diaphragm 24 into the service brake cylinder 2. Further, the reduction ring 36 is substantially cylindrical and has a wall thickness which is a difference between the outer diameter and the inner diameter of the reduction ring 36.

Preferably, the reduction ring 36 is axially attached to the diaphragm 24 on the pressure-relief side, i.e. in the direction of the piston chamber 31 of the service brake cylinder 2. Also, the reduction ring 36 is radially intermediate a radially inner circumferential surface 52 of the service brake cylinder 2 and the push rod 28 which is actuated by the diaphragm 24.

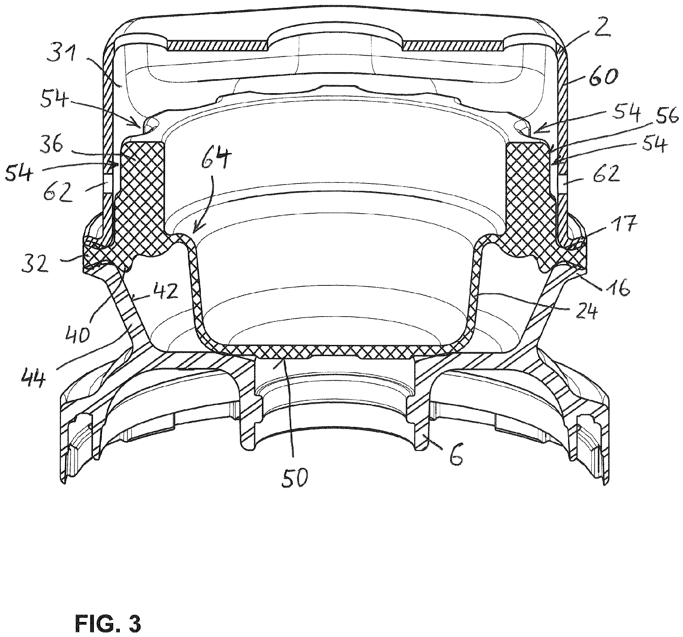

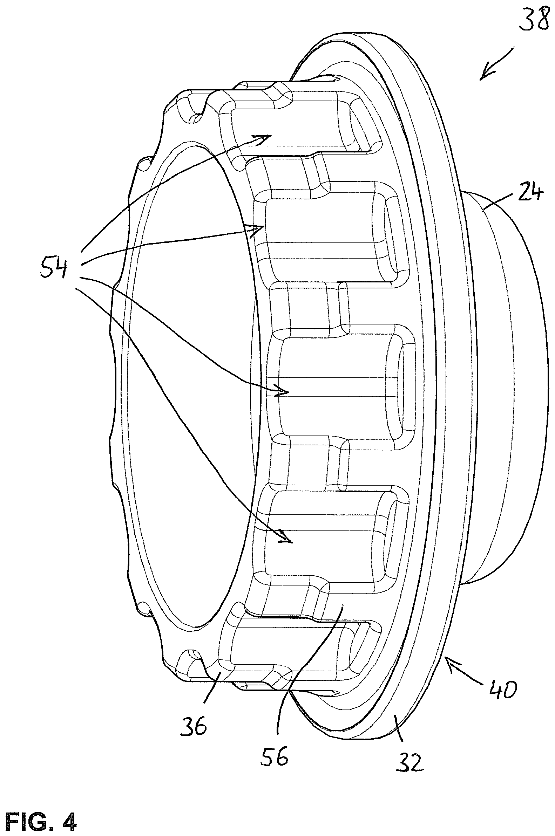

As **Fig. 4** shows, a radially outer circumferential surface 56 of the reduction ring 36 may here, for example, have axial recesses 54 distributed in the circumferential direction and contact with its remaining surface a radially inner circumferential surface 52 of the service brake cylinder 2, as is best illustrated with reference to **Fig. 3****.** Furthermore, breathing openings 62 may be formed in a wall 60 of the service brake cylinder 2 in the region of the piston chamber 31 and here in particular also in the region of the reduction ring 36, which are arranged in such a way that they are permanently connected to the piston chamber 31 of the service brake cylinder 2 by means of the recesses 54. The recesses 54 therefore form a flow connection between the piston chamber 31 and the breathing openings 62 of the service brake cylinder 2. This flow connection comes into effect when, as a result of the axial working movement of the diaphragm 24, the piston chamber is reduced or enlarged so that air is forced out of the piston chamber 31 or drawn into the piston chamber.

Instead of radially outer recesses 54 or in addition thereto, an annular gap may also be provided between the radially outer peripheral surface 56 of the reduction ring 36 and the radially inner peripheral surface 52 of the service brake cylinder 2, which then also creates such a flow connection.

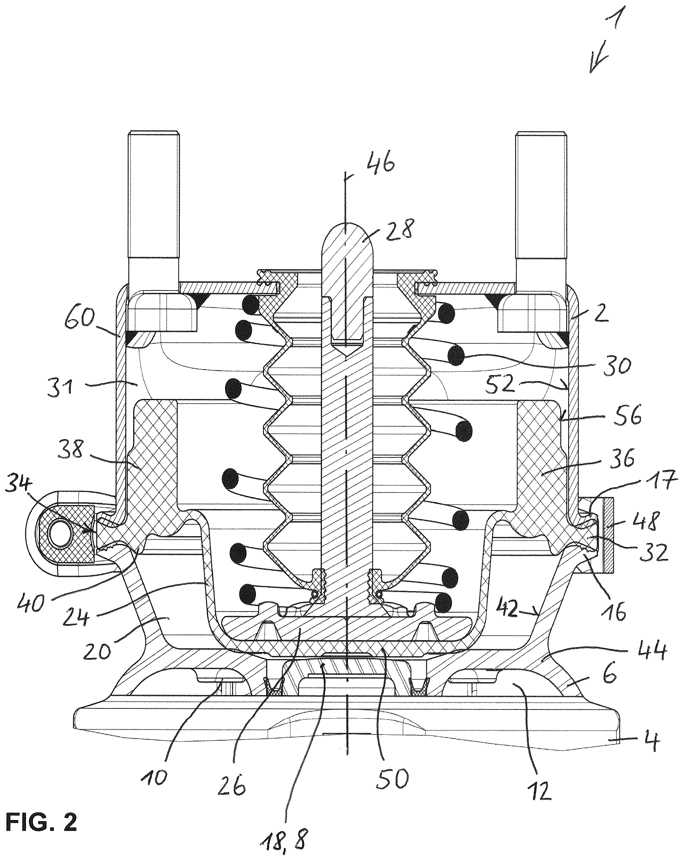

As can be readily imagined with reference to **Fig. 2**, the pneumatic pressure present in the pressure chamber 20 with respect to a working movement of the diaphragm 24 loads an effective area 50 of the diaphragm 24. The effective area 50 of the diaphragm 24 therefore represents an area which can perform the working movement occurring here parallel to the cylinder axis 46 when the pressure chamber 20 is vented.

The purpose of the reduction ring 36 is then to radially reduce the effective area 50 of the diaphragm 24, whereby the reduction ring 36 then also reduces the internal diameter of the service brake cylinder 2. This reduces the effective area 50 of the diaphragm 24 for the pneumatic pressure, which can deform elastically as a result of the pneumatic pressure in the pressure chamber 20. As a result, the force generated at the diaphragm 24 as a result of the pneumatic pressure in the pressure chamber 20 decreases, for example. The wall thickness of the reduction ring 36 can therefore be used to individually adjust the force exerted by the service brake cylinder 2 via the piston rod 28.

As can best be seen from **Fig. 3**, the diaphragm 24 has a bellows-shaped portion 64 extending into the service brake cylinder 2, which is radially inwardly adjacent to the reduction ring 36.

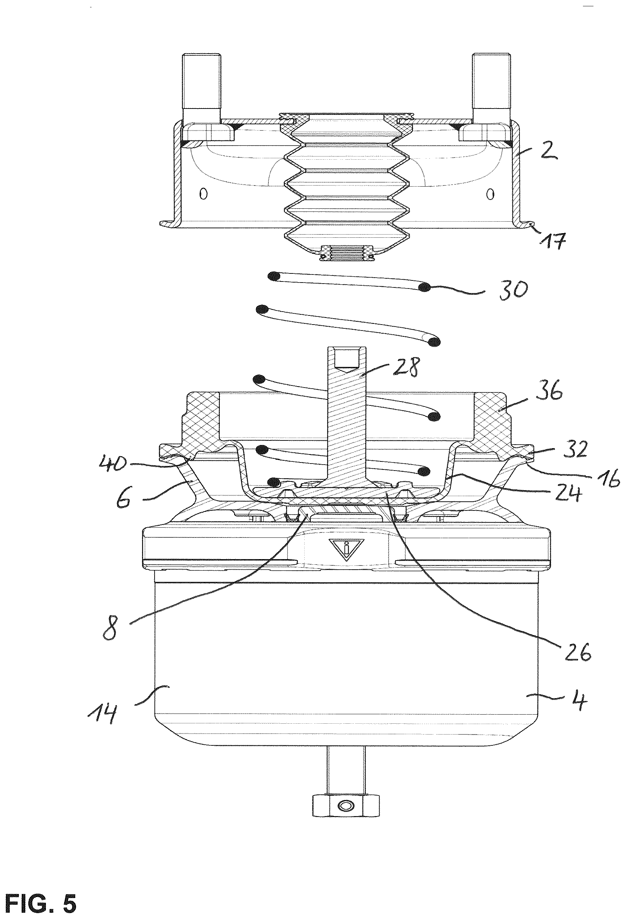

If the reduction ring 36, the diaphragm 24 and optionally also the centering ring 40 are designed as a one-piece component 38, then the manufacturing of the combined service brake and spring brake cylinder 1 is simplified because instead of two parts, namely a separate diaphragm and a separate reduction ring, only the one one-piece component 38 has to be assembled to the combined service brake and spring brake cylinder 1, as shown with reference to **Fig. 5****.** There, an assembly step of an assembly of the combined service brake and spring brake cylinder 1 is illustrated in which

On the other hand, this combination of the diaphragm 24, the reduction ring 36 and optionally also the centering ring 40 also ensures a higher insensitivity of the combined service brake and spring brake cylinder 1 to leaks, because the number of sealing points is reduced.

The use of the one-piece component 38 according to the invention comprising diaphragm 24, reduction ring 36 and optionally centering ring 40 is not limited to a combined service brake and spring brake cylinder 1, but such a one-piece component can of course be used with any type of pneumatic diaphragm brake cylinder.

### LIST OF REFERENCE SIGNS

- 1: combined service brake and spring brake cylinder
- 2: service brake cylinder
- 4: spring brake cylinder
- 6: intermediate flange
- 8: spring brake piston
- 10: storage spring
- 12: spring brake chamber
- 14: spring chamber
- 16: first edge
- 17: second edge
- 18: piston rod
- 20: pressure chamber
- 22: seal
- 24: membrane
- 26: diaphragm plate
- 28: push rod
- 30: return spring
- 31: piston chamber
- 32: peripheral fastening edge
- 34: intermediate space
- 36: reduction ring
- 38: one-piece component
- 40: centering ring
- 42: radial inner circumferential surface
- 44: wall
- 46: cylinder axis
- 48: tension band
- 50: effective area
- 52: radial inner circumferential surface
- 54: recesses
- 56: radial outer circumferential surface
- 60: wall
- 62: breathing openings
- 64: bellows-shaped portion

## Claims

1. Pneumatic diaphragm brake cylinder (1) for motor vehicles, having a housing part (6) on the pressure side and a housing part (2) facing away from the pressure side, as well as a diaphragm (24) which is arranged between them and divides the interior of the diaphragm brake cylinder into two spaces (20, 31) which are sealed off from one another, of which a first chamber (20) comprises a pressure chamber loaded by a pneumatic pressure and a second chamber (31) comprises a piston chamber for a piston (26) actuated by the diaphragm (24), wherein a peripheral fastening edge (32) of the diaphragm (24) is clamped between the pressure-side housing part (6) and the pressure-remote housing part (2), and wherein the diaphragm (24) is arranged between the pressure-side housing part (6) and the pressure-remote housing part (2).
a) the pneumatic pressure loads an effective surface (50) of the diaphragm (24) with respect to a working movement of the diaphragm (24), and
b) a reduction ring (36) extending axially from the diaphragm (24) into the housing part (2) facing away from the pressure is provided, which limits the effective area (50) of the diaphragm (24) radially on the outside, and
c) at least the reduction ring (36) and the diaphragm (24) are designed as a one-piece component.

2. Pneumatic diaphragm brake cylinder according to claim 1, **characterized in that** the reduction ring (36) is axially attached to the diaphragm (24) on the pressure-remote side.

3. Pneumatic diaphragm brake cylinder according to claim 1 or 2, **characterized in that** the diaphragm (24) consists of a fabric-reinforced elastomer.

4. Pneumatic diaphragm brake cylinder according to any one of the preceding claims, **characterized in that** the reduction ring (36) is made of an elastomer without fabric reinforcement.

5. Pneumatic diaphragm brake cylinder according to one of the preceding claims, **characterized in that** a centring ring (40) is arranged on the diaphragm (24) and, in particular, integrally formed thereon, which centring ring is arranged offset radially inwards with respect to the circumferential fastening edge (32), projects axially into the pressure-side housing part (6) and centres the diaphragm (24) with respect to a radially inner circumferential surface (42) of the pressure-side housing part (6).

6. The pneumatic diaphragm brake cylinder of claim 5, **characterized in that** the centering ring (40) is disposed substantially perpendicular to a center plane of the peripheral fastening edge (32).

7. Pneumatic diaphragm brake cylinder according to one of the preceding claims, **characterized in that** the reduction ring (36) is radially interposed between a radially inner circumferential surface (52) of the housing part (2) facing away from the pressure and a piston rod (28) which is actuated by the diaphragm (24).

8. Pneumatic diaphragm brake cylinder according to claim 7, **characterized in that** a radially outer circumferential surface (56) of the reduction ring (36) has at least one recess (54) and/or forms an annular gap with respect to the radially inner circumferential surface (52) of the housing part (2) facing away from the pressure, which annular gap or annular gaps form a flow connection between the second chamber (31) and at least one breathing opening (62) of the housing part (2) facing away from the pressure.

9. Pneumatic diaphragm brake cylinder according to one of claims 2 to 8, **characterized in that** the diaphragm (24) has a bellows-shaped portion (64) extending into the housing part (2) facing away from the pressure, which region adjoins the reduction ring (36) radially on the inside.

10. Pneumatic diaphragm brake cylinder according to any one of the preceding claims, **characterized in that** it comprises a pneumatic service brake cylinder (2).

11. Pneumatic diaphragm brake cylinderaccording to one of the preceding claims, **characterized in that** the pressure-side housing part
a) an intermediate flange (6), which is designed so that a spring brake cylinder (4) can be attached to it, or
b) comprises a spring brake cylinder (4).

12. Pneumatic diaphragm brake cylinder according to claims 11 and 12, **characterized in that** it comprises a combination cylinder (1) of the service brake cylinder and the spring brake cylinder.

13. A pneumatic diaphragm brake cylinder according to any one of the preceding claims, **characterised in that** the peripheral fastening edge (32) has a wedge-shaped cross-section tapering radially inwardly.

14. Pneumatic diaphragm brake cylinder according to claim 14, **characterized in that** a first edge (16) of the pressure-side housing part (6) and a second edge (17) of the housing part (2) facing away from the pressure form axially between them an intermediate space (34) which is complementary with respect to the cross section of the fastening edge (32) tapering radially inwards and increases radially outwards and in which the fastening edge (32) is clamped.

15. Pneumatic diaphragm brake cylinder according to claim 15, **characterized in that** the first edge (16) and the second edge (17) are braced against each other by a tension band (48) or are flanged together under plastic deformation.

16. Pneumatic brake device comprising at least one pneumatic diaphragm brake cylinder (1) according to any one of the preceding claims.

## Patentansprüche

1. Pneumatischer Membranbremszylinder (1) für Kraftfahrzeuge, der ein Gehäuseteil (6) auf der Druckseite und ein Gehäuseteil (2), das von der Druckseite abgewandt ist, sowie eine Membran (24), die dazwischen angeordnet ist und das innere des Membranbremszylinders in zwei gegeneinander abgedichtete Räume (20, 31) unterteilt, wovon eine erste Kammer (20) eine mit einem pneumatischen Druck beaufschlagte Druckkammer umfasst und eine zweite Kammer (31) eine Kolbenkammer für einen durch die Membran (24) betätigten Kolben (26) umfasst, aufweist, wobei eine periphere Befestigungskante (32) der Membran (24) zwischen dem druckseitigen Gehäuseteil (6) und dem druckfernen Gehäuseteil (2) eingeklemmt ist und wobei die Membran (24) zwischen dem druckseitigen Gehäuseteil (6) und dem druckfernen Gehäuseteil (2) angeordnet ist;
a) der pneumatische Druck eine Wirkfläche (50) der Membran (24) in Bezug auf eine Arbeitsbewegung der Membran (24) beaufschlagt, und
b) ein sich axial von der Membran (24) in das Gehäuseteil (2), das vom Druck abgewandt ist, erstreckender Reduzierring (36) bereitgestellt ist, der die Wirkfläche (50) der Membran (24) radial an der Außenseite begrenzt, und
c) mindestens der Reduzierring (36) und die Membran (24) als einteiliges Bauteil gestaltet sind.

2. Pneumatischer Membranbremszylinder nach Anspruch 1, **dadurch gekennzeichnet, dass** der Reduzierring (36) axial an der Membran (24) auf der druckfernen Seite befestigt ist.

3. Pneumatischer Membranbremszylinder nach Anspruch 1 oder 2, **dadurch gekennzeichnet, dass** die Membran (24) aus einem gewebeverstärkten Elastomer besteht.

4. Pneumatischer Membranbremszylinder nach einem der vorstehenden Ansprüche, **dadurch gekennzeichnet, dass** der Reduzierring (36) aus einem Elastomer ohne Gewebeverstärkung gefertigt ist.

5. Pneumatischer Membranbremszylinder nach einem der vorstehenden Ansprüche, **dadurch gekennzeichnet, dass** ein Zentrierring (40) an der Membran (24) angeordnet und insbesondere in einem Stück daran angeformt ist, wobei der Zentrierring in Bezug zur umfänglichen Befestigungskante (32) radial nach innen versetzt angeordnet ist, axial in das druckseitige Gehäuseteil (6) hinein hervorsteht und die Membran (24) in Bezug zu einer radial inneren Umfangsfläche (42) des druckseitigen Gehäuseteils (6) zentriert.

6. Pneumatischer Membranbremszylinder nach Anspruch 5, **dadurch gekennzeichnet, dass** der Zentrierring (40) im Wesentlichen senkrecht zu einer Mittelebene der peripheren Befestigungskante (32) eingerichtet ist.

7. Pneumatischer Membranbremszylinder nach einem der vorstehenden Ansprüche, **dadurch gekennzeichnet, dass** der Reduzierring (36) radial zwischen einer radial inneren Umfangsfläche (52) des Gehäuseteils (2), das von dem Druck abgewandt ist, und einer Kolbenstange (28), die durch die Membran (24) betätigt wird, eingesetzt ist.

8. Pneumatischer Membranbremszylinder nach Anspruch 7, **dadurch gekennzeichnet, dass** eine radial äußere Umfangsfläche (56) des Reduzierrings (36) mindestens eine Vertiefung (54) aufweist und/oder in Bezug zur radial inneren Umfangsfläche (52) des Gehäuseteils (2), das vom Druck abgewandt ist, einen Ringspalt bildet, wobei der Ringspalt oder die Ringspalte eine Strömungsverbindung zwischen der zweiten Kammer (31) und mindestens einer Atmungsöffnung (62) des Gehäuseteils (2), das vom Druck abgewandt ist, bildet.

9. Pneumatischer Membranbremszylinder nach einem der Ansprüche 2 bis 8, **dadurch gekennzeichnet, dass** die Membran (24) einen balgförmigen Abschnitt (64) aufweist, der sich in das Gehäuseteil (2), das vom Druck abgewandt ist, erstreckt, wobei der Bereich an den Reduzierring (36) radial an der Innenseite anschließt.

10. Pneumatischer Membranbremszylinder nach einem der vorstehenden Ansprüche, **dadurch gekennzeichnet, dass** er einen pneumatischen Betriebsbremszylinder (2) umfasst.

11. Pneumatischer Membranbremszylinder nach einem der vorstehenden Ansprüche, **dadurch gekennzeichnet, dass** das druckseitige Gehäuseteil
a) einen Zwischenflansch (6), der so gestaltet ist, dass daran ein Federspeicherbremszylinder (4) befestigt werden kann, oder
b) einen Federspeicherbremszylinder (4) umfasst.

12. Pneumatischer Membranbremszylinder nach den Ansprüchen 11 und 12, **dadurch gekennzeichnet, dass** er einen Kombinationszylinder (1) aus dem Betriebsbremszylinder und Federspeicherbremszylinder umfasst.

13. Pneumatischer Membranbremszylinder nach einem der vorstehenden Ansprüche, **dadurch gekennzeichnet, dass** die periphere Befestigungskante (32) einen sich radial nach innen verjüngenden keilförmigen Querschnitt aufweist.

14. Pneumatischer Membranbremszylinder nach Anspruch 14, **dadurch gekennzeichnet, dass** eine erste Kante (16) des druckseitigen Gehäuseteils (6) und eine zweite Kante (17) des Gehäuseteils (2), das vom Druck abgewandt ist, axial dazwischen einen Zwischenraum (34) bilden, der in Bezug zum Querschnitt der Befestigungskante (32), die sich radial nach innen verjüngt, komplementär ist und radial nach außen zunimmt, und in dem die Befestigungskante (32) eingeklemmt ist.

15. Pneumatischer Membranbremszylinder nach Anspruch 15, **dadurch gekennzeichnet, dass** die erste Kante (16) und die zweite Kante (17) durch ein Spannband (48) gegeneinander verspannt sind, oder durch plastische Verformung aneinander geflanscht sind.

16. Pneumatische Bremsvorrichtung, die mindestens einen pneumatischen Membranbremszylinder (1) nach einem der vorstehenden Ansprüche umfasst.

## Revendications

1. Cylindre de frein pneumatique à membrane (1) pour des véhicules à moteur, présentant une partie de boîtier (6) côté pression et une partie de boîtier (2) opposée au côté pression, ainsi qu'une membrane (24) qui est agencée entre elles et divise l'intérieur du cylindre de frein à membrane en deux espaces (20, 31) qui sont fermés hermétiquement l'un par rapport à l'autre, dont une première chambre (20) comprend une chambre de pression chargée par une pression pneumatique et une seconde chambre (31) comprend une chambre de piston pour un piston (26) actionné par la membrane (24), dans lequel un bord de fixation périphérique (32) de la membrane (24) est serré entre la partie de boîtier côté pression (6) et la partie de boîtier éloignée de la pression (2), et dans lequel la membrane (24) est agencée entre la partie de boîtier côté pression (6) et la partie de boîtier éloignée de la pression (2).
a) la pression pneumatique charge une surface efficace (50) de la membrane (24) par rapport à un mouvement de travail de la membrane (24), et
b) un anneau de réduction (36) s'étendant axialement à partir de la membrane (24) dans la partie du boîtier (2) opposée à la pression est prévu, qui limite la surface efficace (50) de la membrane (24) radialement sur l'extérieur, et
c) au moins l'anneau de réduction (36) et la membrane (24) sont conçus comme un seul élément.

2. Cylindre de frein pneumatique à membrane selon la revendication 1, **caractérisé en ce que** l'anneau de réduction (36) est fixé axialement à la membrane (24) du côté éloigné de la pression.

3. Cylindre de frein pneumatique à membrane selon la revendication 1 ou 2, **caractérisé en ce que** la membrane (24) est constituée d'un élastomère renforcé par tissu.

4. Cylindre de frein pneumatique à membrane selon l'une quelconque des revendications précédentes, **caractérisé en ce que** l'anneau de réduction (36) est composé d'un élastomère sans renfort textile.

5. Cylindre de frein pneumatique à membrane selon l'une des revendications précédentes, **caractérisé en ce qu'**un anneau de centrage (40) est agencé sur la membrane (24) et, en particulier, formé d'une seule pièce sur celle-ci, lequel anneau de centrage est agencé décalé radialement vers l'intérieur par rapport au bord de fixation circonférentiel (32), fait saillie axialement dans la partie de boîtier côté pression (6) et centre la membrane (24) par rapport à une surface circonférentielle radialement interne (42) de la partie de boîtier côté pression (6).

6. Cylindre de frein pneumatique à membrane selon la revendication 5, **caractérisé en ce que** l'anneau de centrage (40) est disposé sensiblement perpendiculairement à un plan médian du bord périphérique de fixation (32).

7. Cylindre de frein pneumatique à membrane selon l'une des revendications précédentes, **caractérisé en ce que** l'anneau de réduction (36) est intercalé radialement entre une surface circonférentielle radialement interne (52) de la partie de boîtier (2) opposée à la pression et une tige de piston (28) qui est actionnée par la membrane (24).

8. Cylindre de frein pneumatique à membrane selon la revendication 7, **caractérisé en ce qu'**une surface circonférentielle radialement externe (56) de l'anneau de réduction (36) présente au moins un évidement (54) et/ou forme un espace annulaire par rapport à la surface circonférentielle radialement interne (52) de la partie de boîtier (2) opposée à la pression, lequel espace annulaire ou lesquels espaces annulaires forment une connexion d'écoulement entre la seconde chambre (31) et au moins une ouverture de respiration (62) de la partie de boîtier (2) opposée à la pression.

9. Cylindre de frein pneumatique à membrane selon l'une des revendications 2 à 8, **caractérisé en ce que** la membrane (24) présente une partie en forme de soufflet (64) s'étendant dans la partie du boîtier (2) opposée à la pression, laquelle région jouxte l'anneau de réduction (36) radialement vers l'intérieur.

10. Cylindre de frein pneumatique à membrane selon l'une quelconque des revendications précédentes, **caractérisé en ce qu'**il comprend un cylindre de frein pneumatique de service (2).

11. Cylindre de frein pneumatique à membrane selon l'une des revendications précédentes, **caractérisé en ce que** la partie de boîtier côté pression
a) une bride intermédiaire (6) qui est conçue de telle sorte qu'un cylindre de frein à ressort (4) puisse être fixé à celle-ci, ou
b) comprenne un cylindre de frein à ressort (4).

12. Cylindre de frein pneumatique à membrane selon les revendications 11 et 12, **caractérisé en ce qu'**il comprend un cylindre combiné (1) du cylindre de frein de service et du cylindre de frein à ressort.

13. Cylindre de frein pneumatique à membrane selon l'une quelconque des revendications précédentes, **caractérisé en ce que** le bord de fixation périphérique (32) présente une section transversale en forme de coin s'effilant radialement vers l'intérieur.

14. Cylindre de frein à membrane pneumatique selon la revendication 14, **caractérisé en ce qu'**un premier bord (16) de la partie de boîtier côté pression (6) et un second bord (17) de la partie de boîtier (2) opposés à la pression forment axialement entre eux un espace intermédiaire (34) qui est complémentaire par rapport à la section transversale du bord de fixation (32) s'effilant radialement vers l'intérieur et augmentant radialement vers l'extérieur et dans lequel le bord de fixation (32) est serré.

15. Cylindre de frein pneumatique à membrane selon la revendication 15, **caractérisé en ce que** le premier bord (16) et le second bord (17) sont serrés l'un contre l'autre par une bande de tension(48) ou sont bridés ensemble sous une déformation plastique.

16. Dispositif de frein pneumatique comprenant au moins un cylindre de frein pneumatique à membrane (1) selon l'une quelconque des revendications précédentes.
